**Europäisches Patentamt**

**European Patent Office**

**Office européen des brevets**

(11) Veröffentlichungsnummer: **0 348 619**

**A2**

# (12) EUROPÄISCHE PATENTANMELDUNG

(21) Anmeldenummer: **89106976.7**

(22) Anmeldetag: **19.04.89**

(51) Int. Cl.⁴ **G09F 9/30 , G02B 6/26**

(30) Priorität: **30.06.88 DE 3822105**

(43) Veröffentlichungstag der Anmeldung:
**03.01.90 Patentblatt 90/01**

(84) Benannte Vertragsstaaten:
**CH DE ES FR GB IT LI NL SE**

(71) Anmelder: **SCHÖLLY FIBEROPTIC GMBH**
**Robert-Bosch-Strasse 1-3**
**D-7819 Denzlingen(DE)**

(72) Erfinder: **Schölly, Werner**
**Hinterhofstrasse 76**
**D-7819 Denzlingen(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) **Wechselzeichen.**

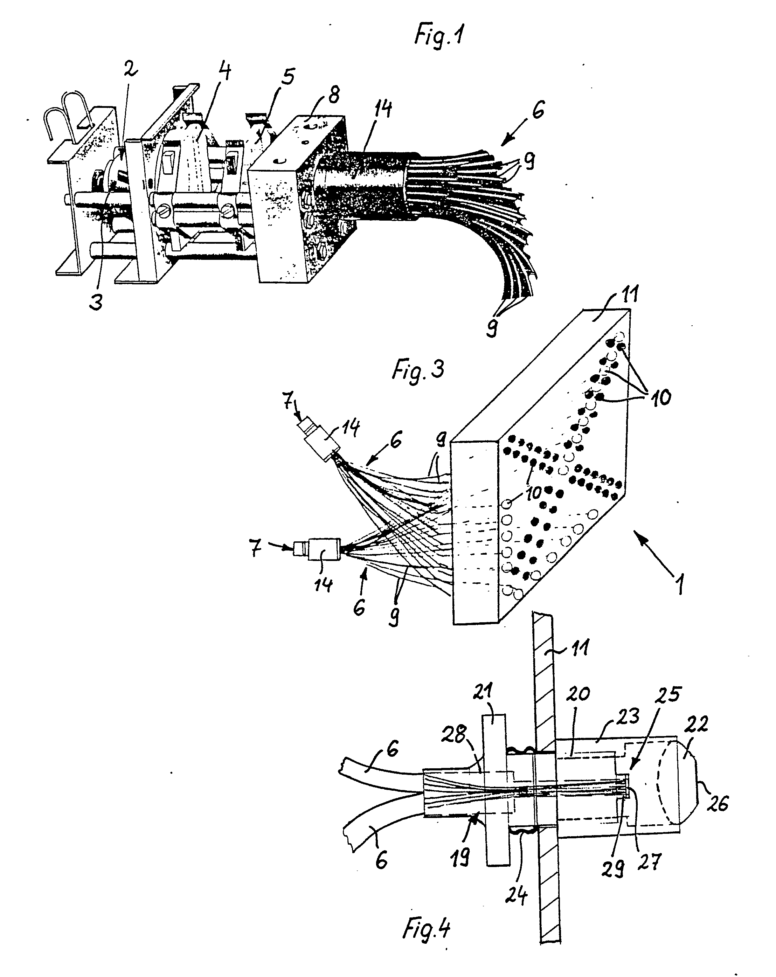

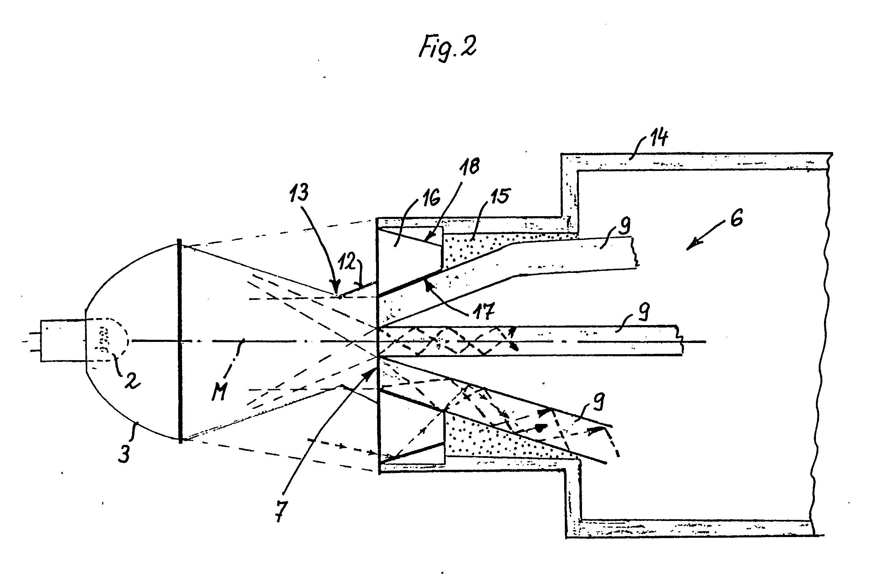

(57) Ein Wechselverkehrszeichen (1) (Fig. 2) weist eine Lichtquelle (2) mit einem Hohlspiegel (3) sowie ein Lichtfaserbündel (6) auf, das mit seinem Eintrittsende bei der Lichtquelle (2) und mit seinem Austrittsende mit einzelnen Fasersträngen (9) bei einer Frontplatte (11) endet, wobei die Enden Lichtpunkte bilden. Um innerhalb der Lichtübertragungsstrecke auftretende Toleranzen der einzelnen Bauteile zu kompensieren und um insgesamt eine gute Gleichmäßigkeit des dargestellten Zeichens zu erreichen, ist als eine Maßnahme vorgesehen, daß der eintrittsseitige Endbereich des Lichtfaserbündels mit seinen einzelnen Fasersträngen (9) schräg zum Licht-Eintrittsende zusammenlaufend ausgebildet ist. Man erhält dadurch eine weitgehend homogene Einstrahlung in die einzelnen Faserstränge. Austrittsseitig läßt sich der Lichtaustrittswinkel für jeden Lichtpunkt einzeln verstellen, so daß hier Intensitätsunterschiede auf einfache Weise nochmals ausgeglichen werden können.

Fig 2

## Wechselzeichen

Die Erfindung betrifft ein Wechselzeichen, insbesondere ein Wechselverkehrszeichen mit ein- und ausschaltbaren Lichtpunkten, mit wenigstens einer einen Hohlspiegel aufweisenden Lichtquelle und mit einem mit seinem Eintrittsende bei der Lichtquelle beginnenden, aus Fasersträngen gebildeten Lichtfaserbündel, welches mit den Austrittsenden der Faserstränge die Lichtpunkte bildet, vor denen jeweils eine optische Austrittslinse angeordnet ist.

Solche Wechselverkehrszeichen dienen insbesondere zum Signalisieren von unterschiedlichen Verkehrssituationen an Autobahnen, Schnellstraßen u. dgl..

Die einzelnen, aus einer Vielzahl von Lichtpunkten gebildeten Zeichen sollen dabei möglichst gleichmäßig dargestellt sein, wobei die Lichtintensitätsabweichungen zwischen den einzelnen Lichtpunkten z.B. weniger als 20 % betragen sollte. Die Lichtintensität darf auch bei schräger Betrachtung des Zeichens innerhalb eines vorbestimmten Winkels einen Grenzwert nicht unterschreiten.

Bei solchen Wechselverkehrszeichen ist jedoch problematisch, daß die Bauteile zur Lichterzeugung und Lichtübertragung stark toleranzbehaftet sind, so daß innerhalb der Lichtübertragungsstrecke eine entsprechend unterschiedliche Beeinflussung der Lichtintensität vorhanden ist.

Bei der Lichtquelle können dabei Helligkeitsunterschiede bis zu 30 %, beim Spiegel bis zu 10 % und bei den einzelnen Fasersträngen können Transmissionsunterschiede bis zu 20 % auftreten. Hinzu kommt, daß durch die Montage der Teile nochmals Veränderungen auftreten können. Diese Fehler können sich im ungünstigen Falle aufaddieren, so daß die vorgegebenen Spezifikationen schwer einzuhalten sind.

Man könnte zwar die einzelnen Baukomponenten einzeln vermessen und ausselektieren, dies würde jedoch in der Praxis bei einer Serienfertigung einen nicht vertretbaren Aufwand bedeuten. Außerdem können dadurch die bei der Montage auftretenden Veränderungen im voraus nicht mitberücksichtigt werden.

Aufgabe der vorliegenden Erfindung ist es, ein Wechselzeichen, insbesondere ein Wechselverkehrszeichen der eingangs erwähnten Art zu schaffen, bei dem trotz der vorhandenen Toleranzen der einzelnen Bauteile eine genügende Lichtintensität des jeweiligen Lichtpunktes und auch eine den vorbestimmten Anforderungen genügende und gegenüber dem Stand der Technik verbesserte Homogenität des dargestellten Zeichens vorhanden ist. Außerdem soll auch bei schräger Betrachtung des Zeichens innerhalb eines möglichst großen Betrachtungswinkels eine hohe Lichtintensität gegeben sein.

Zur Lösung dieser Aufgabe wird erfindungsgemäß insbesondere vorgeschlagen, daß das Eintrittsende des Lichtfaserbündels im Brennpunkt oder mit einem größeren als der Brennweite des Lichtquellen-Hohlspiegels entsprechenden Abstand angeordnet ist und daß die einzelnen Faserstränge schräg zum Eintrittsende zusammenlaufend angeordnet sind. Durch diese Anordnung der Eintrittsenden der Faserstränge erhält man eine weitgehend homogene Einstrahlung in die einzelnen Fasern. Helligkeitsunterschiede innerhalb des Lampenquerschnittes machen sich hierbei praktisch nicht mehr bemerkbar, da jedes Faserstrang-Eintrittsende eine im wesentlichen gleiche Lichteinstrahlung hat. Die innerhalb des Lampenquerschnittes auftretenden, großen Helligkeitsunterschiede machen sich dadurch nur noch in geringem Maße bemerkbar.

Zweckmäßigerweise ist das Eintrittsende des Lichtfaserbün dels plan geschliffen und insbesondere etwa rechtwinklig zum auftreffenden Mittelstrahl bzw. zur optischen Längsmittelachse angeordnet. Dadurch erfolgt eine praktisch symmetrische Einstrahlung aller Faserstrang-Eintrittsenden,so daß sowohl Zentrums- als auch Randfasern im wesentlichen dieselbe Lichtmenge erhalten. Es wird dadurch in Verbindung mit der schräg zulaufenden Anordnung der Faserstränge eine bedeutend höhere Homogenität erreicht, ohne daß dabei eine Reduzierung der aufgenommenen Lichtmenge erfolgt.

Vorteilhafterweise weisen die Fasern einen Aufnahmewinkel von etwa 60 - 70 ° auf. Es können somit preisgünstige Standardfasern verwendet werden mit guter Ausnutzung der numerischen Apertur von diesen Fasern. Die Verwendung dieser Standardfasern ist durch die besondere Anordnung der Eintrittsenden möglich. Man könnte zwar auch mit speziellen Fasern, die einen großen Öffnungswinkel haben, eine Verbesserung der Homogenität erreichen, es treten jedoch bei solchen Fasern höhere Transmissionsverluste auf, durch welche in unerwünschter Weise die Lichtintensität vermindert wird. Außerdem sind solche "Weitwinkel"-Fasern teuer.

Eine bevorzugte Ausführungsform der Erfindung sieht vor, daß das Eintrittsende des Lichtfaserbündels mit einem größeren Abstand zum Hohlspiegel als dessen Brennpunkt angeordnet ist, insbesondere derart, daß der beim Eintrittsende befindliche Lichtkegel-Querschnitt mindestens dem Querschnitt des Eintrittsendes des Lichtfaserbündels entspricht. Somit wird das Eintrittsende des Lichtfaserbündels vollflächig ausgeleuchtet, so daß alle Faserstrangenden etwa gleichmäßig beleuchtet werden.

Eine Weiterbildung der Erfindung sieht vor, daß die einzelnen Faserstränge an ihrem Eintrittsendbereich frei, insbesondere schutzhüllenfrei sind und daß im Bereich dieses Eintrittsendes des Lichtfaserbündels ein dieses außen um greifendes Ringprisma od. dgl. Lichtsammeleinrichtung vorgesehen ist. Dadurch wird im Randbereich einfallendes Licht seitlich in die Randfasern des Bündels eingestrahlt. Die Einstrahlung erfolgt dabei in erster Linie bei den außenliegenden Fasern, die andererseits von ihrer direkten Einstrahlseite her mit etwas geringerer Lichtintensität bestrahlt werden. Dadurch erfolgt praktisch ein Ausgleich mit dem Ergebnis einer auf die einzelnen Faserstränge bezogenen Lichtintensitäts-Angleichung und damit einer besonders guten Homogenität bezogen auf das Lichtfaserbündel.

Eine Maßnahme von eigener, schutzwürdiger Bedeutung zur Vergleichmäßigung der Lichtintensitäten der einzelnen Lichtpunkte sieht vor, daß der Lichtaustrittswinkel am Austrittsende der Faserstränge für jeden Lichtpunkt einzeln verstellbar ist. Somit ist in Kombination eine Intensitäts- und Winkelkorrektur möglich, so daß sich innerhalb des Lichtübertragungsweges auftretende Transmissionsunterschiede korrigieren lassen. Außerdem lassen sich dadurch die einzelnen Lichtpunkte in Abhängigkeit ihrer Lage innerhalb des Zeichens für eine optimale Abstrahlung unter Berücksichtigung verschiedener Betrachtungswinkel einstellen.

Zweckmäßigerweise sind ein oder mehrere, vorzugsweise zwei Faserstränge austrittsseitig mit einem Lichtpunkt-Gehäuse verbunden, welches einen Anschluß zum Befestigen an einer Frontplatte aufweist. In diesem Lichtpunkt-Gehäuse sind die Faserstrangenden gefaßt und lassen sich in einer vorgesehenen Position an der Frontplatte befestigen. Das Lichtpunkt-Gehäuse ist dabei zweckmäßigerweise zylindrisch mit einem Außengewinde und einem rückseitigen Anschlagflansch ausgebildet. Nach einer Ausgestaltung der Erfindung sind die Austrittslinsen jeweils in eine Schraubhülse eingesetzt, welche auf das Außengewinde des Lichtpunkt-Gehäuses aufschraubbar ist. Die Schraubhülse ist hierbei gleichzeitig Halterung für die Austrittslinse und Befestigungselement für das jeweilige Lichtpunkt-Gehäuse.

Vorteilhafterweise ist zwischen dem Anschlagflansch des Gehäuses und dem diesem zugewandten Ende der Schraubhülse, insbesondere zwischen Anschlagflansch und Frontplatte ein elastisch nachgiebiger Abstandhalter eingesetzt, der vorzugsweise durch einen Ring oder Schlauch aus elastischem Material gebildet ist. Durch den nachgiebigen Abstandhalter wird die Anordnung aus Lichtpunkt-Gehäuse und Schraubhülse in beliebiger Einschraublage gehalten. Zusätzliche Sicherungselemente wie z.B. eine Kontermutter od. dgl. sind dadurch nicht erforderlich. Die Austrittslinse jedes Lichtpunktes läßt sich so von Hand an dem fertigen Wechselverkehrszeichen auf einfache Weise fokusieren bzw. einstellen.

Eine Weiterbildung sieht vor, daß am Austritt der Durchgangsöffnung in dem Lichtpunkt-Gehäuse eine oder mehrere Farbfilter- und/oder eine oder mehrere Dämpfungsscheiben angebracht bzw. anbringbar ist (sind). Dadurch ist auf einfache Weise eine Beeinflussung der Farbe der Lichtpunkte oder aber auch der Lichtintensität möglich. Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:

Fig. 1 eine perspektivische Seitenansicht einer Lichtquelle u. dgl. mit daran angeschlossenem, zum Teil dargestelltem Lichtfaserbündel,

Fig. 2 eine etwas schematisierte Längsschnittdarstellung im Bereich einer Lichtquelle mit Hohlspiegel und einem dort plazierten Lichtfaserbündel,

Fig. 3 eine perspektivische Seitenansicht einer Frontplatte mit darin angeordneten Lichtpunkt-Gehäusen und angeschlossenen Fastersträngen zweier Lichtfaserbündel und

Fig. 4 eine Seitenansicht eines in eine Frontplatte eingesetzten Lichtpunkt-Gehäuses mit aufgeschraubter Linsen-Schraubhülse.

In den Figuren 1 und 3 sind die wesentlichen, zu einem Wechselverkehrszeichen 1 gehörenden Baugruppen erkennbar. Fig. 1 zeigt dabei eine Lichtquelle 2, die sich innerhalb eines Hohlspiegels 3 befindet. Vor diesem ist in Abstrahlrichtung ein Wärmeschutzfilter 4 und vor diesem ggf. auch ein Farbfilter 5 angeordnet. In Strahlrichtung schließt sich dann ein Lichtfaserbündel 6 an, dessen Eintrittsende 7 (vgl. Fig. 3) in einer zum Lampengehäuse gehörenden Halterung 8 gelagert ist.

Das Lichtfaserbündel 6 besteht aus einer Vielzahl von Fasersträngen 9, die zu einzelnen Lichtpunkten 10 führen, die matrixartig in einer Frontplatte 11 angeordnet sind. Die an eine Lichtquelle, ggf. eine Doppellichtquelle angeschlossene Gruppe von Lichtpunkten 10 bildet dabei jeweils ein gewünschtes Verkehrszeichen. Dabei besteht die Möglichkeit, daß durch Aktivierung unterschiedlicher Gruppen von Lichtpunkten 10 verschiedene Verkehrszeichen auf einer Frontplatte je nach Bedarf darstellbar sind.

In Fig. 3 sind zwei Lichtfaserbündel 6 erkennbar, welche beide zur Darstellung eines Bildes dienen. Dabei ist für jeden Lichtpunkt 10 ein Faserstrang 9 aus dem einen Lichtfaserbündel und ein weiterer Faserstrang aus dem anderen Lichtfaserbündel pro Lichtpunkt zusammengefaßt. Die beiden Lichtfaserbündel 6 sind mit ihren Eintrittsenden 7 an verschiedene Lichtquellen 2, von denen eine in Fig. 1 dargestellt ist, angeschlossen, so daß das Zeichen auch bei Ausfall einer Lampe weiterleuchtet. Dies ist aus Sicherheits gründen häufig so gefordert.

Um beim Eintrittsende 7 der Lichtfaserbündel 6 eine weitgehend homogene Einstrahlung, d. h. in jeden Faserstrang eines Faserbündels jeweils die praktisch gleiche Lichteinstrahlung zu erhalten, sind die einzelnen Faserstränge 9 in der Nähe des Lichtfaser-Eintrittsendes schräg zu diesem Eintrittsende zusammenlaufend angeordnet, wie dies in Fig. 2 angedeutet ist. Dabei ist auch erkennbar, daß dadurch der Eintrittsendbereich des Lichtfaserbündels 6 etwa kegelstumpfförmig ist. Der Kegelwinkel der äußeren Mantelfläche verläuft dabei etwa entsprechend dem Lichtkegel 12. Die Eintrittsebene 7 des Lichtfaserbündels ist etwas weiter als der Brennpunkt 13 von der Lichtquelle 2 bzw. dem Hohlspiegel 3 angeordnet, wobei der Abstand vom Brennpunkt so bemessen ist, daß der auf das Eintrittsende 7 auftreffende Lichtkegel die Eintrittsenden-Fläche überdeckt. Dadurch erhalten auch die Randfasern eine etwa gleiche Einstrahlung wie die weiter zur Mitte hin angeordneten Faserstrangenden. Durch die konisch zum Eintrittsende 7 zusammenlaufenden Faserstrangenden wird eine bedeutend höhere Homogenität erreicht, ohne daß die aufgenommene Lichtmenge dabei reduziert wird. Für jeden Faserstrang 9 erhält man dabei praktisch eine Einstrahlung der Lampe, die sich aus einem Durchschnittswert der unterschiedlichen Lichtintensitäten der Lampe zusammensetzt. Dies bedeutet, daß Lichtintensitätsänderungen innerhalb des Lampenquerschnittes damit praktisch kompensiert sind. Außerdem ist die Eintrittsfläche des gesamten Lichtfaserbündels 6 durch die zusammenlaufenden Faserstrangenden wesentlich kleiner, was eine homogene Einstrahlung begünstigt.

Der eintrittsseitige Endbereich des Lichtfaserbündels 6 ist in einem Adaptergehäuse 14 zusammengefaßt, wobei das Lichtfaserbündel dort eingegossen sein kann. In Fig. 2 ist punktiert eine entsprechende Vergußmasse 15 angedeutet.

Das Eintrittsende 7 des Lichtfaserbündels 6 ist rechtwinklig zum Mittelstrahl M (Fig. 2) und damit zur optischen Längsmittelachse angeordnet und plan geschliffen. Durch die besondere Ausbildung des Eintrittsendbereiches des Lichtfaserbündels 6 und der dadurch erzielten, weitgehend gleichmäßigen Einstrahlung der einzelnen Faserstränge 9 lassen sich auch preisgünstige Standardfasern mit einem Aufnahmewinkel von etwa 60 - 70° verwenden. Zusätzlich ist hierbei vorteilhaft, daß diese Fasern geringere Transmissionsverluste aufweisen, so daß bei einer vorgegebenen Lichtquelle eine höhere Lichtintensität austrittsseitig bei den Lichtpunkten 10 erzielbar ist.

Fig. 2 zeigt noch eine Zusatzmaßnahme, mittels der "Randlicht" den äußeren Fasersträngen 9 des Lichtfaserbündels 6 zusätzlich zugeführt werden kann. Dazu ist im Bereich des Eintrittsendes 7 des Lichtfaserbündels 6 ein dieses umschließendes Ringprisma 16 vorgesehen, welches eine an die Schräge des Lichtfaserbündels 6 angepaßte Ringinnenseite 17 und eine entgegengesetzt schräg verlaufende Reflektionsaußenseite 18 aufweist. Durch dieses Ringprisma kann außerhalb der Eintrittsfläche 7 vorhandenes Randlicht zusätzlich in die äußeren Faserstränge 9 umgelenkt werden. Trotz weitgehend homogener Einstrahlung durch die erfindungsgemäße Schrägstellung der Faserstrangenden, erhalten die weiter außen liegenden Faserstränge eine geringfügig reduzierte Einstrahlung, welche durch die Zusatz-Seiteneinstrahlung durch das Ringprisma 16 wieder ausgeglichen wird. Das äußere, vom Ringprisma 16 aufgenommene Restlicht wird unter einem knapp außerhalb des Grenzwinkels liegenden Winkel in die Fasern eingebracht. Durch den Brechwert des verwendeten Faserkern-/Mantelmateriales wird dieses Licht so umgeleitet, daß ein Teil davon von den Randfasern aufgenommen und weitergeleitet wird. Die somit benützte Reststrahlung nimmt dabei von außen zum Zentrum hin ab, so daß ein Ausgleich zu den etwas unterschiedlichen, direkten Ein strahlverhältnissen beim Eintrittsende 7 vorhanden ist.

Austrittsseitig enden die Faserstränge 9 bei einem Lichtpunkt-Gehäuse 19, welches mit der Frontplatte 11 verbunden ist. Das Gehäuse 19 ist zylindrisch mit einem Außengewinde 20 und einem rückseitigen Anschlagflansch 21 ausgebildet. Das Gehäuse 19 ist durch eine Bohrung in der Frontplatte 11 hindurchgesteckt und vorderseitig mit einer eine optische Linse 22 haltenden Schraubhülse 23 verschraubt. Zwischen den Anschlagflansch 21 und der Frontplatte 11 ist ein elastisch nachgiebiger Abstandhalter 24 z.B. aus einem Schlauchstück eingesetzt, der bei unterschiedlicher Einschraubtiefe des Gehäuses 19 mit der Schraubhülse 23 für eine Lage- und Verdrehsicherheit sorgt.

Durch diese in Fig. 4 gezeigte Anordnung besteht die Möglichkeit, den Lichtaustrittswinkel für jeden Lichtpunkt separat verstellen zu können. Dies erfolgt durch Verstellen des Abstandes der Linsen 22 zu dem jeweiligen Faserstrang-Austrittsende 22, in dem die Schraubhülse 23 entsprechend verdreht wird.

Mit der Veränderung des Austrittswinkels erhält man auch eine Veränderung der Intensität, wobei mit zunehmendem Austrittswinkel eine Verringerung der Intensität erreicht wird. Durch Verstellen der Linse 22 lassen sich somit innerhalb des Licht-Übertragungsweges auftretende Fehler korrigieren.

Insbesondere erfolgt dies durch eine Lichtmessung, wobei Punkte geringerer Strahlungsintensität durch schmalere Fokusierung heller eingestellt und dann am Rand des Zeichens eingesetzt werden, da hier auch der durch das Fokusieren etwas kleinere Austrittswinkel genügt. Lichtpunkte 10 mit höherer Lichtintensität werden dann eher zentrumsnah eingesetzt, da bei diesen Lichtpunkten ein breiterer Abstrahlwinkel bei noch genügender Strahlungsintensität eingestellt werden kann. Erwähnt sei in diesem Zusammenhang, daß bei der Lichtmessung zunächst die Linsen noch nicht aufgeschraubt sind und hierbei zunächst die Lichtintensität ge messen wird. Bei aufgeschraubter Linse wird dann durch Fokusieren der Abstrahlwinkel eingestellt.

Die Linsen 22 weisen außenseitig eine Planfläche 26 auf, durch die der Lichtaustrittswinkel bei etwa gleicher Intensität vergrößert wird. Je nach Größe dieser Planfläche 26 kann dabei der Abstrahlwinkel bei etwa gleicher Lichtintensität verändert werden.

Beim Austrittsende 25 der Faserstränge 9 können bedarfsweise auch noch Farbfilterscheiben oder ggf. auch Lichtdämpfungsscheiben 27 angeordnet sein. Im Ausführungsbeispiel weist das Lichtpunkt-Gehäuse 19 eine Stufenbohrung 28 auf, wobei der Teil mit dem kleineren Durchmesser beim Austrittsende 25 endet. Das "Gehäuse 19 weist dort einen vorstehenden Ringansatz 29 auf, auf dem die Farbfilterscheiben 27 aufgesetzt und insbesondere durch Klebstoff fixiert werden können. Man hat hierdurch die Möglichkeit, nicht nur alle Lichtpunkte 10 gemeinsam durch ein bei der Lichtquelle 2 angeordnetes Farbfilter 5 zu beeinflussen, sondern es besteht die Möglichkeit, jeden einzelnen Lichtpunkt 10 in einer gewünschten Farbe darstellen zu können. Außerdem können auch dadurch Lichtintensitätsunterschiede durch klare Filterscheiben beeinflußt werden.

Rückseitig sind in die Stufenbohrung 28 die ummantelten Faserstränge 9 eingesetzt, die in dem Teil der Stufenbohrung 28 mit geringerem Durchmesser ohne Ummantelung bis zum Austrittsende 25 weiterlaufen.

Insgesamt erhält man durch die erfindungsgemäßen Maßnahmen ein Wechselverkehrszeichen, bei dem mit vergleichsweise geringem Aufwand die Bauteile-bedingten Toleranzen ausgeglichen werden können, so daß man bei der Darstellung der Zeichen eine besonders gute Homogenität der Darstellung behält.

Alle in der Beschreibung, den Ansprüchen und der Zeichnung dargestellten Merkmale können sowohl einzeln, als auch in beliebiger Kombination miteinander erfindungswesentlich sein.

## Ansprüche

1. Wechselzeichen, insbesondere Wechselverkehrszeichen mit ein- und ausschaltabaren Lichtpunkten, mit wenigstens einer einen Hohlspiegel aufweisenden Lichtquelle und mit einem mit seinem Eintrittsende bei der Lichtquelle beginnenden, aus Fastersträngen gebildeten Lichtfaserbündel, welches mit den Austrittsenden der Faserstränge die Lichtpunkte bildet, vor denen jeweils eine optische Linse angeordnet ist, **dadurch gekennzeichnet,** daß das Eintrittsende (7) des Lichtfaserbündels (6) im Brennpunkt (13) oder mit einem größeren als der Brennweite des Lichtquellen-Hohlspiegels (3) entsprechenden Abstand angeordnet ist und daß die einzelnen Faserstränge (9) schräg zum Eintrittsende zusammenlaufend angeordnet sind.

2. Wechselzeichen nach Anspruch 1, dadurch gekennzeichnet, daß der Eintrittsendbereich des Lichtfaserbündels (6) etwa kegelstumpfförmig ausgebildet ist und daß die Mantelfläche etwa entsprechend der Form des Lichtkegelwinkels hinter dem Brennpunkt verläuft.

3. Wechselzeichen nach Anspruch 1 oder 2, dadurch gekennzeichnet, daß das Eintrittsende (7) des Lichtfaserbündels (6) plan geschliffen und insbesondere etwa rechtwinklig zum Mittelstrahl (M) bzw. zur optischen Längsmittelachse angeordnet ist.

4. Wechselzeichen nach einem oder mehreren der Ansprüche 1 bis 3, dadurch gekennzeichnet, daß die Fasern einen Aufnahmewinkel von etwa 60 bis 70° aufweisen.

5. Wechselzeichen nach einem oder mehreren der Ansprüche 1 bis 4, dadurch gekennzeichnet, daß das Eintrittsende (7) des Lichtfaserbündels (6) mit einem größeren Abstand zum Hohlspiegel (3) als dessen Brennpunkt angeordnet ist, insbesondere derart, daß der beim Eintrittsende (7) befindliche Lichtkegel-Querschnitt mindestens dem Querschnitt des Eintrittsendes (7) des Lichtfaserbündels (6) entspricht.

6. Wechselzeichen nach einem oder mehreren der Ansprüche 1 bis 5, dadurch gekennzeichnet, daß die einzelnen Faserstränge (9) an ihrem Eintrittsendbereich frei, insbesondere schutzhüllenfrei sind und daß im Bereich dieses Eintrittsendes (7) des Lichtfaserbündels (6) ein dieses außen umgreifendes Ringprisma (16) od.dgl. Lichtsammeleinrichtung vorgesehen ist.

7. Wechselzeichen nach Anspruch 6, dadurch gekennzeichnet, daß der schutzhüllenfreie Endbereich des Lichtfaserbündels (6) von dem Ringprisma (16) od.dgl. Lichtsammler umschlossen ist.

8. Wechselzeichen nach Anspruch 6 oder 7, dadurch gekennzeichnet, daß das Ringprisma (16) od.dgl. eine an die Schräge des Lichtfaserbündels (6) im Bereich seines Eintrittsendes angepaßte Ringinnenseite (17) und eine entgegengesetzt schräge Reflexionsaußenseite (18) zum Einbringen von Randlicht zumindest in die außenliegenden Faserstränge (9) aufweist.

9. Wechselzeichen insbesondere nach einem oder mehreren der Ansprüche 1 bis 8, dadurch gekennzeichnet, daß der Lichtaustrittswinkel am Austrittsende (25) der Faserstränge (9) für jeden Lichtpunkt (10) einzeln verstellbar ist.

10. Wechselzeichen nach Anspruch 9, dadurch gekennzeichnet, daß die Austrittslinsen (22) in ihrem Abstand zu dem jeweiligen Faserstrang-Austrittsende (25) verstellbar ist.

11. Wechselzeichen nach Anspruch 9 oder 10, dadurch gekennzeichnet, daß die Austrittslinsen (22) an ihrer konvexen Außenseite eine Planfläche (26) aufweisen, deren Größe auf den vorgesehenen Lichtaustrittswinkel abgestimmt bzw. abstimmbar ist.

12. Wechselzeichen nach einem oder mehreren der Ansprüche 1 bis 11, dadurch gekennzeichnet, daß ein oder mehrere, vorzugsweise zwei Faserstränge (9) austrittsseitig mit einem Lichtpunkt-Gehäuse (19) verbunden sind, welches einen Anschluß zum Befestigen an einer Frontplatte (11) aufweist.

13. Wechselzeichen nach Anspruch 12, dadurch gekennzeichnet, daß das Lichtpunkt-Gehäuse (19) zylindrisch mit einem Außengewinde (20) und einem rückseitigen Anschlagflansch (21) ausgebildet ist.

14. Wechselzeichen nach Anspruch 12 oder 13, dadurch gekennzeichnet, daß die Austrittslinsen (22) jeweils in eine Schraubhülse (23) eingesetzt sind, welche auf das Außengewinde (20) des Lichtpunkt-Gehäuses (19) aufschraubbar ist.

15. Wechselzeichen nach einem oder mehreren der Ansprüche 12 bis 14, dadurch gekennzeichnet, daß zwischen dem Anschlagflansch (21) und dem diesem zugewandten Ende der Schraubhülse (23), insbesondere zwischen Anschlagflansch (21) und Frontplatte (11), ein elastisch nachgiebiger Abstandhalter (24) eingesetzt ist, der vorzugsweise durch einen Ring oder Schlauch aus elastischem Material gebildet ist.

16. Wechselzeichen nach einem oder mehreren der Ansprüche 12 bis 15, dadurch gekennzeichnet, daß das Lichtpunkt-Gehäuse (19) eine zentrale Durchtrittsöffnung hat, die insbesondere als Stufenbohrung (28) eintrittsseitig mit einem Durchmesser zur Aufnahme eines oder mehrerer, vorzugsweise zwei ummantelter Faserstränge (9) und austrittsseitig mit einem Durchmesser entsprechend dem Querschnitt des oder der abgewandelten Faserstränge ausgebildet ist.

17. Wechselzeichen nach einem oder mehreren der vorstehenden Ansprüche, dadurch gekennzeichnet, daß am Austritt der Durchgangsöffnung in dem Lichtpunkt-Gehäuse (19) eine oder mehrere Farbfilter- und/oder eine oder mehrere Dämpfungsscheiben angebracht bzw. anbringbar ist (sind).

*Fig.1*

*Fig.3*

*Fig.4*

Fig.2

EP 0 348 619 A2